# EUROPEAN PATENT SPECIFICATION

(11) **EP 1 123 629 B1**
(45) Date of publication and mention of the grant of the patent: **14.05.2008**
(21) Application number: 99954008.1
(22) Date of filing: 21.10.1999
(51) Int. Cl.: H04Q 7/38

(54) **METHOD AND SYSTEM FOR NUMBERING PROCESS IN CONNECTION WITH A CALL TRANSFER**
VERFAHREN UND SYSTEM ZUR PROZESSNUMMERIERUNG IM ZUSAMMENHANG MIT RUFÜBERGABE
PROCEDE ET SYSTEME DE TRAITEMENT DE NUMERATION LORS D'UN TRANSFERT D'APPEL

(30) Priority: 21.10.1998 FI 982281
(43) Date of publication of application: 16.08.2001
(73) Proprietor: Elisa Oyj, 00520 Helsinki (FI)
(72) Inventor: KARI, Jarmo, FIN-08100 Lohja (FI)
(74) Representative: Lipsanen, Jari Seppo Einari
(86) International application number: PCT/FI1999/000875
(87) International publication number: WO 2000/024215

(56) References cited:
- WO-A1-92/22174
- WO-A1-94/29994
- WO-A1-97/07643
- US-A- 5 711 002

## Description

The invention relates to a system according to the preamble of claim 1 for processing a number in conjunction with call transfer.

The invention also relates to a method for processing a number in conjunction with call transfer.

By virtue of the invention, it is possible to process (using the steps of number change, storage and routing) in digital cellular telephone networks the destination number of a call transfer service defined by the subscriber.

In addition to voice calls, the invention is also applicable to other user-definable services of cellular telephone networks (e.g., fax and data transmission).

Conventionally, the call transfer services of a GSM system are arrange so that the subscriber can himself set the inbound call to be transferred to a destination number (called the c-number later in the text). The call transfer service covers both unconditional (undelayed) and conditional (no answer, busy, not in network) number routing sequences that may be allocated for the subscriber's use in combination or as separate services.

One of the documents describing prior art is WO 97 07643.

The c-number of the call transfer service activated by the subscriber is stored in the home location register, HLR, of the GSM network, wherefrom the number information is transmitted to the visitor location register, VLR, where the subscriber is connecting. Hence, the VLR into whose area the subscriber is being connected requests for subscriber data from the HLR. Respectively, if the subscriber is already roaming into the area of the VLR and makes a change in his call transfer list, the HLR will automatically download the updated subscriber data to the VLR.

Because the information on a conditional call transfer including the c-number is transmitted, at the roaming of a subscriber abroad into the area of a nonnational GSM network operator, to said operator's visitor location register VLR, it is a current practice to store the c-numbers activated by subscriber in the home location register HLR always in the international format
+<CC><xxxxxxxx> ; where character + (plus) is the indicator of the international number mode, CC is the country code and xxxxxxxx is the subscriber's national number.
Character "+" stands for the operator-specific code for international calls outbound from the national network, whereby the character may, e.g., in Finland be interpreted as 999, 994, 990 etc. Thus, for a Finnish operator Radiolinja, for instance, the character "+" corresponds in this network number sequence 999.

Accordingly, the prior-art convention is to store the c-number into the HLR always in the international format even if the subscriber enters the c-number for national use in the national format (whereby such numbers as, e.g., 050xxxxxxx, 09xxxxxxx, etc., will be stored in a format having the first discriminating digit 0 replaced by +358) or, respectively, if the subscriber would enter the number for international calls in the format 999 CC xxxxxxx or 990 CC xxxxxxx or 994 CC xxxxxxx. It is also possible to prevent call transfers to nonnational numbers from being entered in any other format than those having the character "+" in front of the number or, as an optional alternative to this, in an international call format equivalent to having the prefix character "+" in front of the number or in given, separately specified international number formats used for nonnational calls.

Country codes of international numbers are always country-specific and there may be a plurality of them, whereby an unsuccessful conditional call transfer would result from a c-number stored, e.g., as 994 358xxxxxxx when a subscriber is roaming abroad (e.g., in Sweden the prefix 994 does not invoke an international call, but rather, redirects the call to an incorrect number or even blocks the attempted call entirely.)

When a call is placed, e.g. to Stockholm, Sweden, by dialing, e.g., a number +46 8 12345678 (or by dialing the identically routed number 999 46 12345678 as mentioned above), the switching centers of Radiolinja will direct the call to the international network of Finnet. Dialing with the prefix 990 46.... will respectively direct the call via the international network of Sonera, with prefix 994 via the international network of Telia, etc. When the number is signaled to the recipient international network, number format is transmitted as TON=INT; TypeOfNumber= International, without corresponding prefix digits selecting the international network.

Resultingly, the charges relating to the call consist of both the charge of the cellular-phone call and the international call charge of the selected international network operator. Obviously, these charges are determined, among other factors, by the call destination country, call duration and time of day/week.

In conjunction with the call transfer service, the call is directed in the same fashion as a dialed call, but herein the destination number (c-number) is searched from the database of the VLR (for conditional transfers) or of the HLR (for unconditional transfers). As a result, the above-described inflexible convention forces a call that is set to be transferred to a c-number to be routed, e.g., in Finland always from the Radiolinja network cited as an exemplifying operator via the international network of Finnet which was cited as another exemplifying operator, whereby the international call charges of the call are always billed according to the call rates applied by Finnet.

This kind of the prior-art technique has certain practical shortcomings.

As it is possible, e.g., in Finland to let a subscriber to select the international network operator for any dialed call, it would be customer-friendly and uncomplicated to extend this facility also to the subscriber-specified call transfers. In other words, the calls routed abroad by the subscriber should also be forwarded via his international network operator of choice, however, allowing conditional call-forwarding services to function in a normal fashion when the subscriber is roaming abroad.

Furthermore, telecommunication network may provide access to numbers that a subscriber can dial for normal calls but may not set a call transfer to these numbers. Examples of such numbers are quick-dial and service numbers that are either commonly accessible by all subscribers or are defined on a subscriber-specific basis.

Currently, calling these numbers is most generally implemented utilizing the IN technology facilities so that, based on the number of the calling party (or the caller category or similar information available during call set-up), the SCP of the switching center searches the subscriber data from its database and, based thereon, converts the dialed number into the actual destination number to which the call will eventually be directed in the network.

Frequently, there appears a need for call transfer to numbers of the above-mentioned kind, whereby the service enjoyed by the customer can be made to function in an easy and consistent manner when either calling a number or setting up a call transfer thereto.

It is an object of the invention to overcome the above-mentioned disadvantages and to provide an entirely novel type of system and method for number routing in conjunction with a call transfer.

The goal of the invention is achieved by virtue of a system in which to the HLR is connected an integral control unit and data storage units that in turn contain the address and subscriber data required for identifying the VLR's and control rules for utilizing the data stored in databases.

More specifically, the system according to the invention is characterized by what is stated in the characterizing part of claim 1.

Furthermore, the method according to the invention is characterized by what is stated in the characterizing par of claim 2.

The invention offers significant benefits.

The invention makes it is possible, also in conjunction with call transfers, to route calls via the international network of an operator preferred by the subscriber. Furthermore, the invention facilitates call transfer to a number common to all subscribers or, alternatively, to a subscriber-specific number.

In the following, the invention will be examined with the help of exemplifying embodiments by making reference to the attached drawings, in which:
Fig. 1 shows a block diagram of a system according to the invention;
Fig. 2 shows a flow diagram of an embodiment of the method according to the invention; and
Fig. 3 shows a flow diagram of another embodiment of the method according to the invention.

The basic steps of an embodiment according to the invention function as follows:

When the subscriber sets a call transfer to a c-number, all national numbers (national numbers, ka) are stored in the HLR in the international format, while the nonnational numbers (kv) are stored in the HLR in the same format as entered by the subscriber, that is, without converting the subscriber-entered c-number, as is evident from the table below:

| **Number type** | **c-number as dialed by subscriber** | **c-number storage format in HLR** |
|---|---|---|
| ka | 09xxxxxxxx (national number) | +3589xxxxxxxx |
| ka | 014xxxxxxx | +34814xxxxxxxx |
| | etc.. | |
| kv | +CCxxxxxxxx | +CCxxxxxxxx |
| kv | 999CCxxxxxxxx | 999CCxxxxxxxx |
| kv | 994CCxxxxxxxx | 994CCxxxxxxxx |
| kv | 990CCxxxxxxxx | 990CCxxxxxxxx |
| | etc | |
| kv | 00CCxxxxxxxxx | 999CCxxxxxxxxx (if subscriber is a Finnet customer) |
| | | 994CCxxxxxxxxx (if subscriber is a Telia customer) |
| | | 990CCxxxxxxxxx (if subscriber is a Sonera customer) |
| kty | 5555 | +358 50 5555 (based on a rule common to all subscribers) or |
| | | +358 50 5555 6 (based on a rule common to all subscribers) or |
| | | +358 50 5665 (based on a rule common to all subscribers) or |
| | | +358 9 67585 (based on a rule common to all subscribers) or etc. |
| tk | 4444 | +358 50 6 4444 (based on a subscriber-specific rule) or |
| | | +358 50 4444 6 (based on a subscriber-specific rule) or |
| | | +358 50 6 44646 (based on a subscriber-specific rule) or |
| | | +358 96565432 (based on a subscriber-specific rule) or etc. |

The VLR has an address number from which the HLR can resolve whether the subscribers is connected to the VLR of his local network operator or the VLR of a nonnational network operator.

When the subscriber is in his own country (in his local operator network), the HLR transmits to the above-mentioned VLR's the data of call transfer with the c-number formatted as registered by the local network. In the context of the present application, the term local operator network is used for making reference to the network of a given local operator that typically covers a geographically confined area. While said confined geographical area on the filing date of the present application typically is limited to a single country, there are no technical limitations to the extension of the local network over the area of a plurality of countries. When the subscriber is outside the local network, e.g., from abroad, the HLR transmits to the nonnational VLR's the data of the subscriber call transfer, however, after the HLR has converted the local format of the c-number into a format prefixed with character + according to the following table

| **c-number format in HLR** | **c-number format transmitted by HLR to local network VLR's** | **c-number format transmitted by HLR to nonnational network VLR's** |
|---|---|---|
| +CCxxxxxxxx | +CCxxxxxxxx | +CCxxxxxxxx |
| 999CCxxxxxxxx | 999CCxxxxxxxx | +CCxxxxxxxx |
| 994CCxxxxxxxx | 994CCxxxxxxxx | +CCxxxxxxxx |
| 990CCxxxxxxxx | 990CCxxxxxxxx | +CCxxxxxxxx |
| etc. | | |

On the basis of subscriber data and a set of different control rules, the system can also process the c-numbers of call transfers in the following fashion.

It may occur that the subscriber activates a call transfer to such a c-number which is not an international number (kv) or a national number (ka), but is, e.g., 777 possibly representing to a number common to all subscribers (kty) or a subscriber-specific number (tk). Then, the general set of control rules can be applied to convert the c-number into a new format, e.g., by
- replacing a digit or digits in the subscriber c-number (at beginning, mid or end),
- adding a digit or digits to the subscriber c-number (at beginning, mid or end),
- replacing the subscriber c-number with an entirely new c-number common to all subscribers,
- deriving a new c-number from the subscriber a-number of the calling-party connection according to a predetermined rule, or
- barring the subscriber from placing a call transfer to said c-number.

The above-described general control rules may also be implemented by being defined in a subscriber-specific manner.

The system according to the invention comprises a control system to be connected to the HLR, whereby the control system may be situated in entirely separate equipment or, alternatively, embedded partially or entirely in the HLR or other element of the network.

The system includes a control unit and the following data structure units that in principle may be situated in any component of the network:
- address data required for the identification of the VLR's
   Identification based on, e.g., national vs. nonnational VLR.
- Subscriber data (general data and subscriber-specific data)
   Subscriber data contains the following kind of information: existence of a valid subscriber agreement of prefix 00 selection service control and the specific operator providing the service;
   parameters possibly common to all subscribers, e.g., defining a conversion of the format of one or more numbers of the call transfer service prior to storage in the system; and
   possible subscriber-specific parameters, e.g., defining a conversion of the format of one or more numbers of the call transfer service prior to storage in the system.
- Control rules
   Control rules and conditions to determine the comparison routines of database information with the call transfer request defined by the subscriber or a transmit request of data received from a VLR.
   Such rules may comprise, e.g.: no change, change by replacing one or more digits, change by adding digits, replace number by a new number stored in subscriber data.

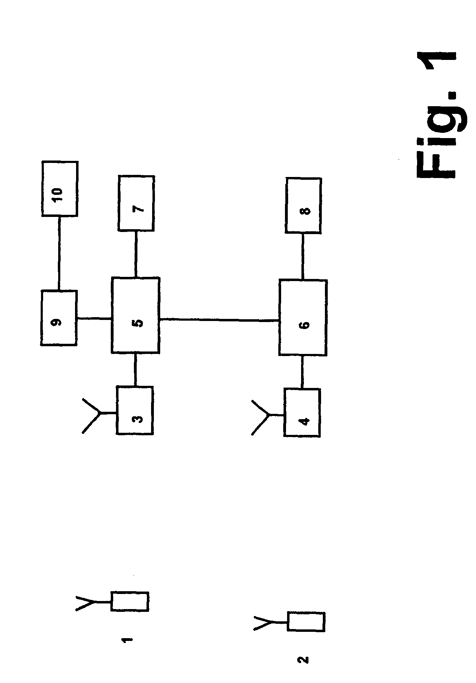

As shown in Fig. 1, the mobile telephone system according to the invention comprises at least one smart-card-controlled mobile telephone 1, 2, at least one base station system 3-4 of a limited coverage for a radio-frequency connection with said mobile telephones 1 and 2, and at least one mobile telephone switching center 5-6. To the mobile telephone switching center 5-6 is connected at least one visitor location register VLR 7-8 and at least one home location register HLR 9. At least one of the HLR's has a control system 10 according to the invention connected thereto.

The VRL 7-8, which is specific to each mobile telephone switching center, maintains information on all subscribers connected thereto within the coverage of the base station system serving said mobile telephone switching center.

The mobile telephone switching center 5-6 forwards and transmits the activation data (trigger + response) of the service information communicated between the mobile telephone 1-2 and the home location register HLR 9 as well as the subscriber data transfers between the VLR and the HLR.

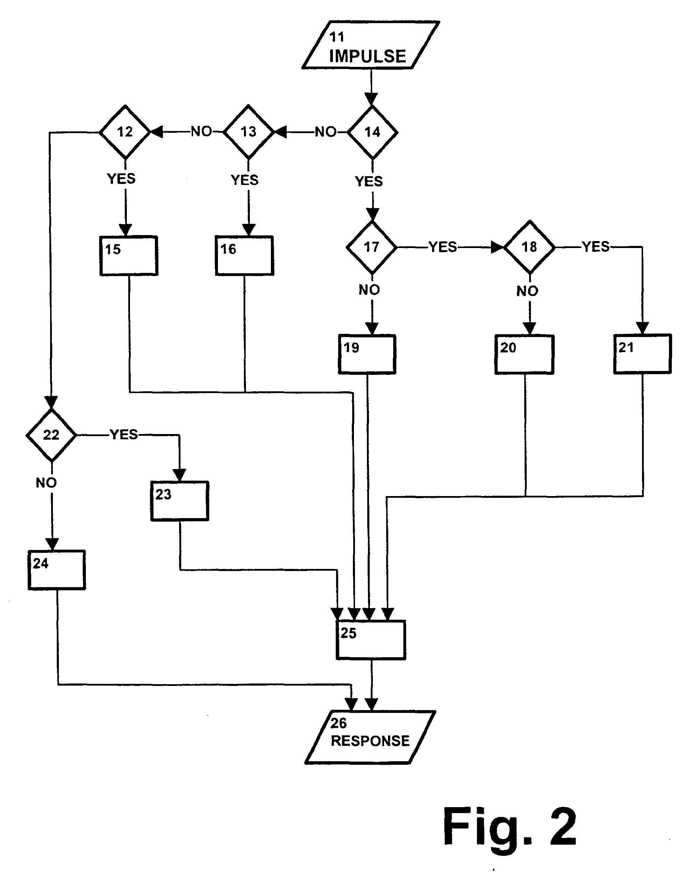

With reference to the block numbers of the flow diagram of Fig. 2, the functions of the flow diagram are described in the following:
- 11 TRIGGER:: subscriber activates a call transfer to a c-number, during which operation the subscriber may be connected to either his local network or a nonlocal network
- 12:: is c-number common to all subscribers? (Yes =>15; No =>20)
- 13:: is c-number a national number? (Yes =>16; No =>12)
- 14:: is c-number a nonnational number? (Yes =>17; No =>13)
- 15:: replace c-number by new c-number derived according to the general rule (=>25)
- 16:: 0-prefix of c-number is replaced by +358 (=>25)
- 17:: is international call dialed using prefix 00? (Yes =>18; No =>19)
- 18:: is a preset international call dialing prefix stored for the subscriber for calls with 00 prefix? (Yes =>21; No =>20)
- 19:: replace c-number by the subscriber-defined format of c-number (=>25)
- 20:: international call prefix 00 of c-number is replaced by character + (=>25)
- 21:: replace international call prefix 00 of c-number by the international call prefix defined in stored subscriber data (=>25)
- 22:: has subscriber a subscriber-specific rule for conversion of c-number? (Yes =>23; No =>24)
- 23:: replace c-number by new c-number derived according to the subscriber-specific rule (=>25)
- 24:: reject subscriber-activated call transfer due to incorrect c-number (=>26)
- 25:: store c-number in subscriber data of home location register HLR (=>26)
- 26 RESPONSE:: HLR sends a message to the subscriber reporting a successful (or unsuccessful) call transfer

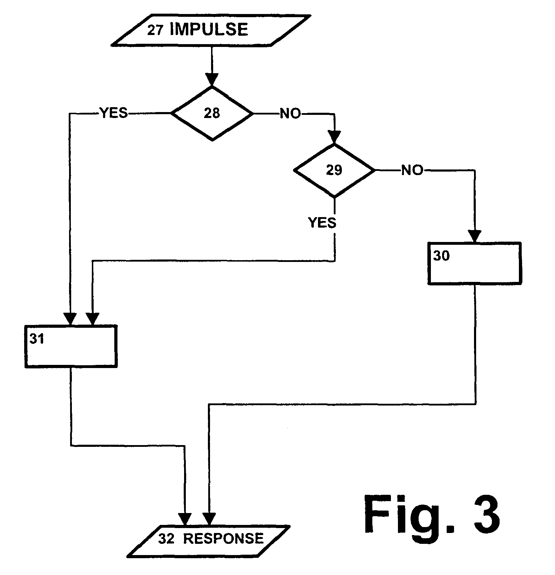

With reference to the block numbers of the flow diagram of Fig. 3, the invention is described in more detail:
- 27 TRIGGER:: VLR requests HLR to send subscriber data? (Note: prior to this, the network bars the connection to the subscriber)
- 28:: is the VLR requesting information a local network VLR? (Yes =>31; No =>29)
- 29:: is c-number dialed by the subscriber stored in HLR in a format with prefix character +? (Yes =>31; No =>30)
- 30:: c-number of call transfers activated by the subscriber is obtained by retrieving the stored c-number from HLR and modifying the same by replacing the international call prefix (999, 990 etc.) by character + (=>32)
- 31:: c-number of call transfers activated by the subscriber is the unmodified c-number stored in HLR (=>32)
- 32 RESPONSE:: HLR sends subscriber data to VLR requesting the information. (Note: VLR bars connection of subscriber to the network until requested information is received).

According to the invention, the activation step of the call transfer places no limitations to subscriber location during the activation of the call transfer service. In contrast, the invention is particularly related to number processing after the activation of the call transfer service and a procedure defining the rules according to which a c-number stored in HLR shall be used in a VLR after the activation of said service, said rules being subject to the condition whether subscriber is connected to a local network or a nonlocal network.

## Claims

1. Mobile telephone system comprising at least one smart-card-controlled mobile telephone (1, 2), at least one base station system (3-4) of a limited coverage for a radio-frequency connection with said mobile telephones (1, 2), and at least one mobile telephone switching center (5-6) having at least one visitor location register VLR (7-8) and at least one home location register HLR (9) connected thereto, **characterized in that** at least one HLR (9) has a control system (10) connected thereto, said system including means for analyzing said destination number, hereafter in referred as c-number, to which a call transfer is activated, means for analyzing the subscriber location as well as means for issuing a command for storing said destination number and thus storing said destination number in said HLR (9) in an international format, whereby said destination number stored in said HLR as such is usable for a call transfer by said VLR with the provision that said destination number of the call transfer service is stored in an international call format and the subscriber is detected to be located within the coverage of his local mobile telephone network.

2. Method for use in a mobile telephone system comprising at least one smart-card-controlled mobile telephone (1, 2), at least one base station system (3-4) of a limited coverage for a radio-frequency connection with said mobile telephones (1, 2), and at least one mobile telephone switching center (5-6) having at least one visitor location register VLR (7-8) and at least one home location register HLR (9) connected thereto **characterized in that**, in conjunction with the activation of a call transfer service, the c-number to which a call transfer is activated is analyzed and, on the basis of the analysis results, said c-number is stored in international format in said HLR (9).

3. Method according to claim 2, **characterized in that** said destination number to which a call transfer is activated is stored as such in said HLR (9) with the provision that said number is found in the analysis to be an international number complete with an operator-specific international call prefix.

4. Method according to claim 3, **characterized in that** if the subscriber after the activation of the call transfer service is found to be connected to a local mobile telephone network, said c-number as such is used for routing said call transfer to said destination number.

5. Method according to claim 2, **characterized in that** if said c-number to which a call transfer is activated is found in the analysis to be a number with a predetermined prefix (00) involving a subscriber agreement with an operator, the prefix of said c-number is converted into an international call prefix defined in said agreement.

6. Method according to claim 2 or 3, **characterized in that** if the subscriber after the activation of the call transfer service is found to be connected to a network external to his local mobile telephone network, said c-number is converted into an international call format.

## Patentansprüche

1. Mobiltelefonsystem, welches aufweist: mindestens ein Smartcard-gesteuertes Mobiltelefon (1, 2), mindestens ein Basisstationssystem (3 - 4) mit einem begrenzten Versorgungsbereich für eine Funkfrequenzverbindung mit den Mobiltelefonen (1, 2) und mindestens ein Mobiltelefon-Vermittlungszentrum (5 - 6), mit dem mindestens ein Besucherortsregister VLR (7 - 8) und mindestens ein Heimortsregister HLR (9) verbunden sind,
**dadurch gekennzeichnet, dass**
mindestens ein HLR (9) ein damit verbundenes Steuersystem (10) aufweist, wobei das System aufweist: eine Einrichtung zum Analysieren der Zielnummer, nachstehend als c-Nummer bezeichnet, zu der eine Rufübergabe aktiviert ist, eine Einrichtung zum Analysieren des Teilnehmerorts sowie eine Einrichtung zum Ausgeben eines Befehls zum Speichern der Zielnummer und demgemäß zum Speichern der Zielnummer im HLR (9) in einem internationalen Format, wodurch die in dem HLR gespeicherte Zielnummer als solche für eine Rufübergabe durch das VLR verwendbar ist, vorausgesetzt, dass die Zielnummer des Rufübergabediensts in einem internationalen Rufformat gespeichert ist und festgestellt wird, dass sich der Teilnehmer innerhalb des Versorgungsbereichs dieses lokalen Mobiltelefonnetzes befindet.

2. Verfahren zur Verwendung in einem Mobiltelefonsystem, das mindestens ein Smartcard-gesteuertes Mobiltelefon (1, 2), mindestens ein Basisstationssystem (3 - 4) mit einem begrenzten Versorgungsbereich für eine Funkfrequenzverbindung mit den Mobiltelefonen (1, 2) und mindestens ein Mobiltelefon-Vermittlungszentrum (5 - 6), mit dem mindestens ein Besucherortsregister VLR (7 - 8) und mindestens ein Heimortsregister HLR (9) verbunden sind, aufweist,
**dadurch gekennzeichnet, dass**
in Zusammenhang mit der Aktivierung eines Rufübergabediensts die c-Nummer, zu der eine Rufübergabe aktiviert ist, analysiert wird, und auf der Grundlage des Analyseergebnisses die c-Nummer in einem internationalen Format im HLR (9) gespeichert wird.

3. Verfahren nach Anspruch 2, **dadurch gekennzeichnet, dass** die Zielnummer, zu der eine Rufübergabe aktiviert ist, als solche im HLR (9) gespeichert wird, vorausgesetzt, dass bei der Analyse herausgefunden wird, dass die Nummer eine internationale Nummer ist, die mit einer Betreiber-spezifischen internationalen Rufvorwahl vollständig festgelegt ist.

4. Verfahren nach Anspruch 3, **dadurch gekennzeichnet, dass** die c-Nummer als solche, falls nach der Aktivierung des Rufübergabediensts herausgefunden wird, dass der Teilnehmer mit einem lokalen Mobiltelefonnetz verbunden ist, für das Weiterleiten des Rufübergabe zu der Zielnummer verwendet wird.

5. Verfahren nach Anspruch 2, **dadurch gekennzeichnet, dass**, falls bei der Analyse herausgefunden wird, dass die c-Nummer, zu der eine Rufübergabe aktiviert ist, eine Nummer mit einer vorbestimmen Vorwahl (00) ist, welche eine Teilnehmervereinbarung mit einem Betreiber betrifft, die Vorwahl der c-Nummer in eine internationale Rufvorwahl konvertiert wird, die in der Vereinbarung definiert ist.

6. Verfahren nach Anspruch 2 oder 3, **dadurch gekennzeichnet, dass** die c-Nummer in ein internationales Rufformat konvertiert wird, falls nach der Aktivierung des Rufübergabediensts herausgefunden wird, dass der Teilnehmer mit einem Netz verbunden ist, das sich außerhalb seines lokalen Mobiltelefonnetzes befindet.

## Revendications

1. Système de téléphonie mobile comprenant au moins un téléphone mobile commandé par une carte intelligente (1, 2), au moins un système de stations de base (3-4) ayant une couverture limitée pour une connexion par radiofréquence avec lesdits téléphones mobiles (1, 2), et au moins un centre de commutation de téléphonie mobile (5-6) comprenant au moins un enregistreur de localisation des visiteurs ou VLR (7-8), et au moins un enregistreur de localisation nominal ou HLR (9) connectés à lui, **caractérisé en ce que** au moins un HLR (9) possède un système de contrôle (10) connecté à lui, ledit système comprenant des moyens pour analyser ledit numéro de destination que l'on appellera le numéro c, dans la suite du document, vers lequel un transfert d'appel est activé, des moyens pour analyser le lieu de résidence de l'abonné, ainsi que des moyens pour générer une instruction de commande d'enregistrement dudit numéro de destination, et pour enregistrer ainsi ledit numéro de destination dans ledit HLR (9) sous un format international, moyennant quoi ledit numéro de destination enregistré dans ledit HLR est utilisable en tant que tel pour un transfert d'appel par ledit VLR sous réserve que ledit numéro de destination du service de transfert d'appel soit enregistré sous un format d'appel international et que l'abonné soit détecté comme se trouvant à l'intérieur de la zone de couverture de son réseau de téléphonie mobile local.

2. Procédé destiné à être utilisé dans un système de téléphonie mobile comprenant au moins un téléphone mobile commandé par une carte intelligente (1, 2), au moins un système de stations de base (3-4) ayant une couverture limitée pour une connexion par radiofréquence avec lesdits téléphones mobiles (1, 2), et au moins un centre de commutation de téléphonie mobile (5-6) comprenant au moins un enregistreur de localisation des visiteurs ou VLR (7-8), et au moins un enregistreur de localisation nominal ou HLR (9) connectés à lui, **caractérisé en ce que**, en conjonction avec l'activation d'un service de transfert d'appel, le numéro c vers lequel un transfert d'appel est activé est analysé et, sur la base du résultat de l'analyse, ledit numéro c est enregistré sous un format international dans ledit HLR (9).

3. Procédé selon la revendication 2, **caractérisé en ce que** ledit numéro de destination vers lequel un transfert d'appel est activé est enregistré en tant que tel dans ledit HLR (9) sous réserve que ledit numéro soit déterminé, au terme de l'analyse, comme étant un numéro international complet comprenant un préfixe d'appel international spécifique à un opérateur.

4. Procédé selon la revendication 3, **caractérisé en ce que** si l'abonné, consécutivement à l'activation du service de transfert d'appel, est détecté comme se trouvant connecté à un réseau de téléphonie mobile local, ledit numéro c est utilisé en tant que tel pour acheminer ledit transfert d'appel vers ledit numéro de destination.

5. Procédé selon la revendication 2, **caractérisé en ce que**, si le numéro c vers lequel un transfert d'appel est activé est déterminé, au terme de l'analyse, comme étant un numéro comprenant un préfixe prédéterminé (00) impliquant un accord contractuel de l'abonné avec un opérateur, le préfixe dudit numéro c est converti à un préfixe d'appel international défini dans ledit contrat.

6. Procédé selon la revendication 2 ou 3, **caractérisé en ce que** si l'abonné, consécutivement à l'activation du service de transfert d'appel, est détecté comme se trouvant connecté à un réseau extérieur à son réseau de téléphonie mobile local, ledit numéro c est converti à un format d'appel international.
